**Europäisches Patentamt**

**European Patent Office**

**Office européen des brevets**

(11) Veröffentlichungsnummer: **0 029 863**
**B1**

(12) # EUROPÄISCHE PATENTSCHRIFT

(45) Veröffentlichungstag der Patentschrift:
**16.05.84**

(51) Int. Cl.³: **A 61 C 1/08,** A 61 C 1/18

(21) Anmeldenummer: **79104768.1**

(22) Anmeldetag: **29.11.79**

(54) **Zahnärztliche Handstückanordnung.**

(43) Veröffentlichungstag der Anmeldung:
**10.06.81 Patentblatt 81/23**

(45) Bekanntmachung des Hinweises auf die Patenterteilung:
**16.05.84 Patentblatt 84/20**

(84) Benannte Vertragsstaaten:
**AT CH DE FR GB IT SE**

(56) Entgegenhaltungen:
**DE - A - 2 810 044**
**DE - A - 2 905 035**
**DE - B - 1 219 170**
**DE - B - 1 491 038**
**DE - B - 2 633 223**
**DE - U - 7 729 110**

(73) Patentinhaber: **SIEMENS AKTIENGESELLSCHAFT,**
**Berlin und München Wittelsbacherplatz 2,**
**D-8000 München 2 (DE)**

(72) Erfinder: **Schuss, Werner, In der Lahrbach 18,**
**D-6148 Heppenheim (DE)**

## Zahnärztliche Handstückanordnung

Die Erfindung bezieht sich auf eine zahnärztliche Handstückanordnung mit einem eine Antriebswelle aufnehmenden Antriebsteil und einem daran drehbar und axial davon abnehmbar gehaltenen Griffteil, an welchem ein demgegenüber abgewinkeltes Kopfteil mit Kopfgehäuse zur Aufnahme einer Lagerhülse für ein Drehwerkzeug und mit Halsteil abnehmbar gehaltert ist, mit mehreren Triebwellenabschnitten zur Übertragung der Drehbewegung von der Antriebswelle auf die Lagerhülse sowie mit wenigstens zwei hintereinander im Antriebsteil und Kopfteil angeordneten Kühlmittelleitungsabschnitten für wenigstens ein Kühlmittel, welche durch eine aus einem Ringkanal im einen und einer mit diesem korrespondierenden, radial in den Ringkanal mündenden Öffnung im anderen der gegeneinander verdrehbaren Handstückteile bestehenden Drehkupplung miteinander verbunden sind.

Bei einer bekannten Handstückanordnung (DE-A2-14 91 038) bilden Griff- und Kopfteil ein sogenanntes Hand- und Winkelstück, welches gegen das Antriebsteil gedreht und betriebsmäßig von diesem abgenommen werden kann. Der Antriebsteil enthält zu diesem Zweck einen die Antriebswelle umgebenden Führungsschaft, der in eine entsprechende Bohrung im Handstück so weit eingreift, bis die Getriebeverzahnung von Antriebswelle und Triebwellenabschnitt des korrespondierenden Handstückteils miteinander in Eingriff stehen. In dieser Stellung ist das Handstück mittels einer betriebsmäßig zu lösenden Rasteinrichtung gegen axiales Abgleiten gesichert. Solch eine Rasteinrichtung kann aus einer Ringnut am einen und einer radial in die Ringnut eingreifenden, durch einen Druckknopf betätigbare Rastfeder am anderen der miteinander zu kuppelnden Teile bestehen. Griff- und Kopfteil sind im Bereich der Knickstelle durch eine Schraubverbindung miteinander verbunden. Nach Lösen dieser Schraubverbindung verbleibt sowohl im Griff- als auch im Kopfteil der darin gelagerte Triebwellenabschnitt. Die Kühlmittelübertragung erfolgt bei diesem Handstück außen über einen flexiblen Schlauch, der an einem einerseits am Kopfgehäuse und andererseits am Antriebsteil angeordneten Rohrstutzen anzuschließen ist.

Aus der DE-B-12 19 170 ist eine Handstückanordnung bekannt, bei der zwar ein mit der Antriebswelle fest gekuppelter Triebwellenabschnitt, der an seinem freien Ende zwei gleichartige Triebzahnräder mit unterschiedlicher Zähnezahl aufweist, bis zum Schnittpunkt der Achsen des abgewinkelten Handstückteils reicht; diese Konstruktion enthält jedoch keine Kühlmittelleitungsabschnitte und auch keine Drehkupplung im eingangs genannten Sinne.

Bei einer anderen Handstückanordnung (USA-A-40 07 529 = DE-A1-24 31 472), die eine interne, sogenannte inkorporierte Kühlmittelleitungsführung mit Drehkupplung aufweist, befindet sich der eine Teil einer Drehkupplung für die Kühlmittelübertragung, nämlich Ringkanäle mit Dichtringen, am Führungsschaft des Antriebsteils; zur Übernahme der Kühlmittel von den Ringkanälen sind am Handstück radiale Bohrungen vorgesehen, die den anderen Teil der Drehkupplung bilden.

Bei solchen, mit Kühlmittelübertragung an der Drehkupplung versehenen Handstückanordnungen belastet das relativ häufige Wechseln der Kopf- und Griffteile die Dichtelemente aus der Drehkupplungsstelle, denn bei jedem An- und Abkuppelvorgang wird die Drehkupplung gelöst, wodurch die Gefahr des Eindringens von Staub und Schmutz in die Ringkanäle bzw. Bohrungen gegeben ist und darüber hinaus die Dichtringe auf Scherung beansprucht werden.

Um Arbeiten in unterschiedlichen Drehzahlbereichen durchführen zu können, sind bei den bekannten Handstückanordnungen mehrere der jeweils aus Kopfteil, Halsteil und Griffteil bestehenden Handstücke mit unterschiedlichen Unter- bzw. Übersetzungsgetrieben bereitzustellen, von denen, je nach gewünschtem Drehzahlbereich, in dem gearbeitet werden soll, das eine oder andere auf das Antriebsteil aufzustecken ist.

Die Bereitstellung solcher unterschiedlicher kompletter Handstücksätze ist bereits bauseits relativ aufwendig, weil praktisch für jeden Über- oder Untersetzungsbereich ein komplettes, mit Triebwellen versehenes Handstück, bestehend aus Kopfteil mit Kopfgehäuse, Halsteil und sich daran anschließenden Griffteil, bereitgestellt werden muß. Berücksichtigt man ferner, daß der Zahnarzt, um rationell arbeiten zu können, praktisch mehrere solcher kompletter Handstücksätze haben muß, ist der finanzielle Aufwand auch für den Kunden relativ groß.

Aufgabe der vorliegenden Erfindung ist es, eine demgegenüber verbesserte und vereinfachte Handstückanordnung der eingangs genannten Gattung anzugeben, insbesondere mit dem Ziel, einerseits die auf das Antriebsteil aufsetzbaren, das Kopfgehäuse tragenden Handstückteile weniger aufwendig zu gestalten und damit auch kostengünstiger herstellen zu können und andererseits dafür Sorge zu tragen, daß die Drehkupplungsteile einerseits beim Wechsel der vorderen Handstückteile nicht getrennt werden, andererseits aber noch so gestaltet sind, daß die dem Verschleiß bzw. einer Wartung unterliegenden Teile relativ einfach ausgewechselt werden können.

Die gestellte Aufgabe wird gemäß der Erfindung dadurch gelöst, daß der mit der Antriebswelle des Antriebsteils fest gekuppelte Triebwellenabschnitt bis zum Schnittpunkt der abgewinkelten Achsen reicht und an seinem freien Ende zwei gleichartige Triebzahnräder mit unterschiedlicher Zähnezahl aufweist, daß dieser Triebwellenabschnitt und dessen Lager von einer ersten Hülse aufgenommen werden, die den einen Teil der Drehkupplung bildet und den einen Kühlmittelleitungsabschnitt trägt, daß konzentrisch zu dieser Hülse eine zweite Hülse angeordnet ist, die den anderen Teil der Drehkupplung bildet und die das Kühlmittel von der ersten Hülse übernimmt und mittels eines weiteren Kühlmittelleitungsabschnittes an den Kopfteil weiterleitet, daß ferner die erste Hülse mittels einer Rastvorrichtung an einem die Antriebswelle konzentrisch umgebenden Ansatz gegen Verdrehung gesichert, axial aber lösbar befestigt ist, daß die zweite Hülse mittels einer betriebsmäßig zu lösenden Rasteinrichtung an der ersten Hülse drehbar befestigt ist, und daß die zweite Hülse in einer diese und einen Teil des Halsteils überdeckenden Außenhülse gehaltert ist, die den Griffteil bildet, und an der der Kopfteil mit dem Kopfgehäuse und den darin gelagerten übrigen Triebwellenabschnitten abnehmbar gehalten ist, wobei das Triebzahnrad am freien Ende des dem Antriebsteil zugewandten Triebwellenabschnittes mit dem einen oder anderen Triebzahnrad des antriebsseitigen Triebwellenabschnittes in Eingriff zu bringen ist.

Wesentliche Vorzüge der erfindungsgemäßen Konstruktion sind, daß, um in unterschiedlichen Drehzahlbereichen arbeiten zu können, nicht mehr das komplette Handstück bis zum Führungsschaft des Antriebsteils ausgewechselt zu werden braucht, sondern nurmehr der demgegenüber erheblich kürzere und damit kostenmäßig billigere Kopfteil mit dem Kopfgehäuse und dem sich daran anschließenden Halsteil, daß die Drehkupplung beim Wechsel dieser erheblich kürzeren Handstückteile im gekuppelten Zustand verbleibt, also nicht getrennt wird, und daß zum Sterilisieren des Griffteils lediglich eine leere Hülse ohne Triebwelle und deren Lagerung sowie ohne Dichtelemente abgezogen zu werden braucht, denn die zuletzt genannten, bezüglich Sterilisieren an sich kritischen Teile verbleiben am nicht zu sterilisierenden Antriebsteil.

Vorteilhafte Ausgestaltungen und Weiterbildungen der Erfindung sind in den Unteransprüchen enthalten. Ein Ausführungsbeispiel der Erfindung wird anhand der Figuren näher erläutert. Es zeigt

Fig. 1 ein zahnärztliches Handstück komplett mit Antriebsteil,

Fig. 2 Einzelteile des Handstückes nach Fig. 1 in einer Explosionsdarstellung in demontiertem Zustand,

Fig. 3 einen Längsschnitt durch das montierte Handstück nach Fig. 1.

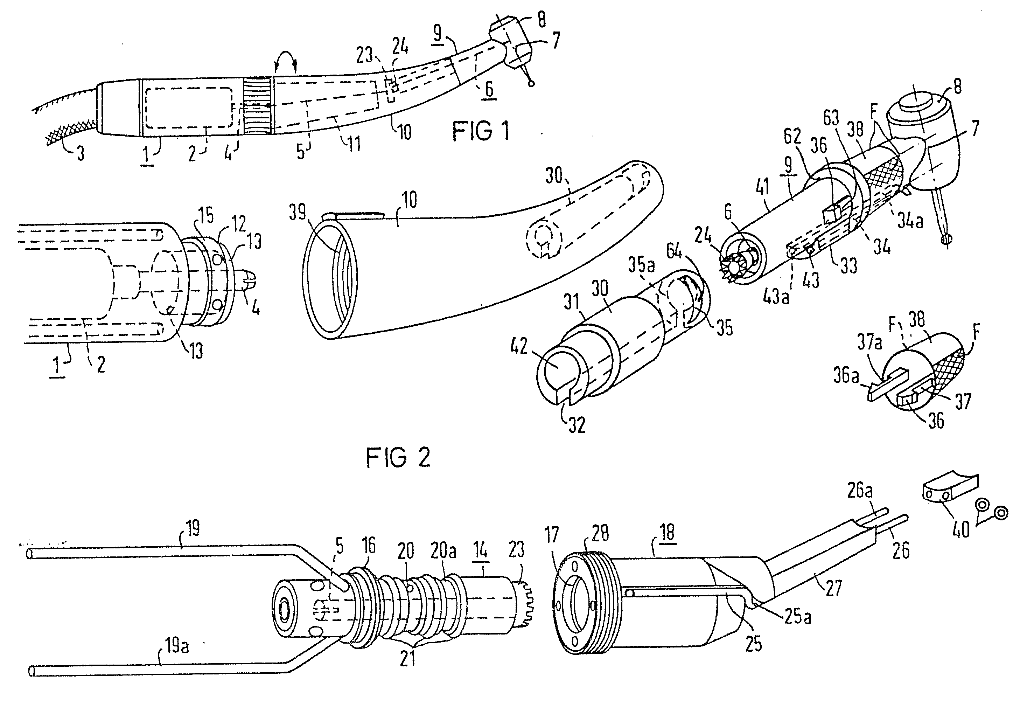

Die Fig. 1 zeigt ein zahnärztliches Handstück mit einem Antriebsteil 1, der einen mit 2 bezeichneten Antriebsmotor (Elektromotor) enthält, dem über einen Versorgungsschlauch 3 Antriebsenergie zugeführt wird. An die Antriebswelle 4 des Elektromotors schließen sich in der Figur schematisch eingezeichnete Triebwellenabschnitte 5, 6, 7 an, über die in bekannter Weise ein in einem Kopfgehäuse 8 des Handstückes drehbar gelagertes, nicht näher bezeichnetes Werkzeug angetrieben wird. Das Kopfgehäuse 8 ist Teil eines mit 9 bezeichneten Kopfteiles, welches die beiden Triebwellenabschnitte 6 und 7 sowie deren Lager aufnimmt und welches abnehmbar an einer Handstückgriffhülse 10 gehaltert ist. Die Handstückgriffhülse 10 umschließt eine mit 11 bezeichnete, aus zwei konzentrischen Hülsen bestehende Lagereinheit, die den Triebwellenabschnitt 5 sowie ein Drehlager zur Übertragung einer oder mehrerer Kühlmedien vom Antriebsteil 1 auf das Kopfteil 9 enthält. Die Handstückhülse 10 ist zusammen mit dem Kopfteil 9 und einer später noch näher bezeichneten Hülse der Lagereinheit 11 gegen das Antriebsteil 1 um die Handstücklängsachse drehbar (Pfeil).

Das Antriebsteil 1 enthält (Fig. 2) einen zylindrischen Absatz 12 mit einer in der Darstellung gestrichelt angedeuteten Eindrehung 13, in die im montierten Zustand das eine (in der Figur linke) Ende einer Hülse 14 eingreift. Auf den Absatz 12 ist ferner eine Kugelrastung 15 zur axialen Fixierung der Hülse 14 aufgesetzt. Die Hülse 14 enthält ferner einen in einer Nut eingelegten Federring 16, der im montierten Zustand in eine Ringnut 17 der Hülse 18 eingreift, die zusammen mit der Hülse 14 die Lagereinheit 11 bilden. An der Hülse 14 sind zwei Kühlmittelleitungen 19, 19a befestigt, deren eine Enden in bekannter Weise über radiale Bohrungen in Ringkanäle 20, 20a münden, welche durch Dichtungsringe 21 gegeneinander abgedichtet sind. Die Hülse 14 nimmt ferner noch den Triebwellenabschnitt 5 auf, der der Antriebsseite abgewandt ein Triebzahnrad 23 enthält, das im montierten Zustand mit einem Zahnrad 24 des Triebwellenabschnittes 6 kämmt. Die an der Hülse 14 vorstehenden Leitungsenden der Leitungsabschnitte 19, 19a greifen im montierten Zustand in nicht näher bezeichnete Längsnuten des Antriebsgehäuses 1 ein und sind mit im Versorgungsschlauch 3 geführten Zuführungsleitungen verbunden.

Die Hülse 18 ist im montierten Zustand konzentrisch zur Hülse 14 angeordnet und enthält Kühlmittelleitungsabschnitte 25, 25a, welche wiederum in bekannter Weise die Kühlmittel aus den Ringkanälen 20, 20a übernehmen. Die Kühlmittelleitungsabschnitte 25, 25a weisen Rohrstutzen 26, 26a auf, welche in einem schräg verlaufenden Fortsatz 27 der Hülse 18 gehalten sind. Die Hülse 18 enthält ferner einen die Ringnut 17 für das Eingreifen des Federringes 16 enthaltenden Schraubring 28, mit dem die Hülse 18 in der Handstückhülse 10 axial festgelegt werden kann.

Mit 30 ist eine federnde, geschlitzte Führungsbuchse bezeichnet, die mit Vorspannung in der Handstückhülse 10 eingeklemmt ist (siehe strichpunktierte Darstellung). Hierzu enthält die Hülse 10 eine entsprechende Eindrehung, in die ein Bund 31 der Führungsbuchse 30 einschnappt. Die Führungsbuchse 30 ist so in der Handstückhülse 10 gegen axiales Abgleiten gesichert. Die Führungsbuchse 30 ist ferner mit einem durchgehenden Längsschlitz 32 versehen, in den einerseits der Fortsatz 27 der Hülse 18 und andererseits ein längsverlaufender Ansatz 33 des Kopfteils 9 eingreift, der Kühlmittelleitungsabschnitte 34, 34a aufnimmt, die im Bereich des Kopfgehäuses 8 in eine gemeinsame Kühlmittelaustrittsdüse münden.

Die Führungsbuchse 30, die als Verdrehsicherung einerseits des Teils 18 und andererseits des Kopfteils 9 dient, enthält weiterhin zwei beidseitig am Umfang angeordnete Rastschlitze 35, 35a, in die radial federnde Rastnasen 36, 36a eingreifen, wenn das Kopfteil 9 auf der Handstückhülse axial aufgeschoben wird. Die beiden Rastnasen 36, 36a sind mittels achsparallel verlaufender Stege 37, 37a auf einer Federhülse 38 befestigt. Die Federhülse 38 ist sehr dünnwandig ausgebildet und am Kopfteil 9 so angeordnet, daß sie eine äußere Mantelfläche bildet. Bei radialem Druck auf die Hülse 38, z. B. durch Daumen und Zeigefinger einer Hand, bewegen sich die beiden Rastnasen 36, 36a radial nach innen, wodurch diese mit den Schlitzen 35, 35a außer Eingriff kommen.

Die Stege 37 brauchen nicht unbedingt fest an der Betätigungshülse 38 angeordnet zu sein; denkbar und im Rahmen der Erfindung ist auch eine Konstruktion, bei der die Stege lediglich kraftschlüssig, z. B. in einer Führungsnut der Hülse eingelegt, mit der Hülse 38 verbunden sind. Auch hinsichtlich der Anzahl der vorgesehenen Rastnasen sind Abweichungen vom dargestellten Ausführungsbeispiel möglich, ohne jedoch den Rahmen der Erfindung zu verlassen. Die Anordnung von zwei diametral einander gegenüberliegenden Rastnasen ist zwar besonders vorteilhaft; für bestimmte Zwecke ist es jedoch auch denkbar, nur eine Rastnase oder drei bzw. vier Rastnasen vorzusehen.

Im Rahmen der Erfindung liegt auch eine Ausführungsform, bei der die federnde Hülse mit ein oder mehreren Ausnehmungen am Umfang versehen ist und die Stege mit den Rastnasen am anderen Handstückteil angeordnet sind.

Zur Montage des Handstückes wird zunächst die Hülse 30 in der Handstückhülse 10 eingeklemmt. Der Ansatz 31, der in einer entsprechenden Eindrehung der Handstückhülse 10 einrastet, verhindert ein axiales Verstellen der Hülse. Danach wird die Hülse 18 in die Handstückhülse 10 eingeschoben; der Fortsatz 27 greift dabei in den Längsschlitz 32 der Buchse 30 ein. Mittels des mit einem Außengewinde versehenen Schraubringes 28 wird die Hülse 18 in der Handstückhülse 10 axial fixiert, wozu diese mit einem Innengewinde 39 versehen ist.

Die Hülse 14 ist, wie bereits erwähnt, mittels der Kugelrastvorrichtung 15 am Antriebsteil 1 verdrehsicher und axial nicht betriebsmäßig lösbar befestigt. Die Handstückhülse 10 mit der darin gehalterten Führungsbuchse 30 und der Hülse 18 mit den Kühlmittelleitungen 25, 25a kann nun axial auf die Hülse 14 so weit aufgeschoben werden, bis der Federring 16 in die Nut 17 einrastet und die Handstückhülse somit axial fixiert werden.

Auf die beiden Rohrstutzen 26, 26a wird eine aus ein oder mehreren Elementen bestehende elastische Dichtung 40 aufgeschoben. Die Dichtung ist so ausgebildet, daß sie auf den beiden Rohrstutzen 26, 26a eng anliegt. Das Kopfteil 9 tritt mit einem Schaft- oder Halsteil 41 in die Öffnung 42 der Hülse 30 ein. Der Führungsansatz 33, der zur besseren Zentrierung ein sich zum Antriebsteil hin verjüngendes Ende aufweisen kann, greift nach einem bestimmten Einschubweg in die Schlitzführung 32 ein. Das Kopfteil 9 ist so gegen Verdrehung gesichert. Bei weiterem Einführen des Kopfteils 9 in die Handstückhülse 10 kommen schließlich die Leitungskanäle 43, 43a der Kühlmittelleitungsabschnitte 34, 34a in Eingriff mit den Rohrstutzen 26, 26a. Ein erster Anschlag 62, der die axiale Einfuhrtiefe des Schaftes 41 des Kopfteils 9 begrenzt, kann an geeigneter Stelle vorgesehen sein. Bei Erreichen des Anschlages 62 sind die Rastnasen 36, 36a mit den beiden Rastschlitzen 35, 35a in Eingriff, wodurch das Kopfteil 9 zunächst axial gegenüber der Handstückhülse 10 fixiert ist. Die Dichtung 40 gewährleistet in dieser Raststellung eine dichte Verbindung der Kühlmittelleitungsabschnitte 25, 34.

Die Dichtung 40 hat noch eine weitere Funktion zu erfüllen; sie soll nämlich für eine in axialer Richtung definierte Eingriffslage der beiden Zahnräder 23, 24 sorgen. Zu diesem Zweck stehen die beiden Rastnasen 36, 36a mit geringem Axialspiel mit den Rastschlitzen 35, 35a in Eingriff. Die Vorspannkraft der Dichtung 40, welche durch das Zusammenkuppeln der Handstückteile erzeugt wird, versucht, das Kopfteil 9 von der Griffhülse 10 wegzudrücken. Dabei ergibt sich eine in axialer Richtung eindeutige Positionierung der Handstückteile durch Anschlag der Kanten 63 der Rastnasen 36, 36A an den Kanten 64 der Rastschlitze 35, 35a. In dieser Position ist selbstverständlich der Anschlag an der Stelle 62 wieder aufgehoben.

Anstelle der elastischen Dichtung 40 kann z. B. auch ein quer zum Schlitz 34 eingelegter Federdraht, ein Federband o. dgl., vorgesehen werden, gegen den die Stirnfläche des Führungsansatzes 33 oder Teile davon anliegen. Auch hier sorgt das axial wirkende Druckmittel dafür, daß in gekuppeltem Zustand der Handstückteile eine in axialer Richtung stets definierte, gleichbleibende Eingriffsposition der Triebzahnräder 23, 24 gegeben ist.

Zum Lösen des Kopfteils 9 wird die Federhülse 38 in dem in der Darstellung mit F bezeichneten Flächenbereich, in dem sich die Rastnasen-Schlitzverbindung befindet, radial leicht zusammengedrückt. Durch das Zusammendrücken, das zweckmäßigerweise mit Daumen und Zeigefinger erfolgen kann, verformt sich die Federhülse, wodurch die Rastnasen-Schlitzverbindung 35, 36 außer Eingriff kommt. Die Anordnung der Rastverbindung in dem gezeigten Bereich erlaubt ein gefahrloses An- und Abkuppeln der Handstückteile, weil das Kopfteil praktisch nur an den Seitenflanken, also in dem Flächenbereich, der in das Kopfgehäuse tangierend übergeht, angefaßt zu werden braucht.

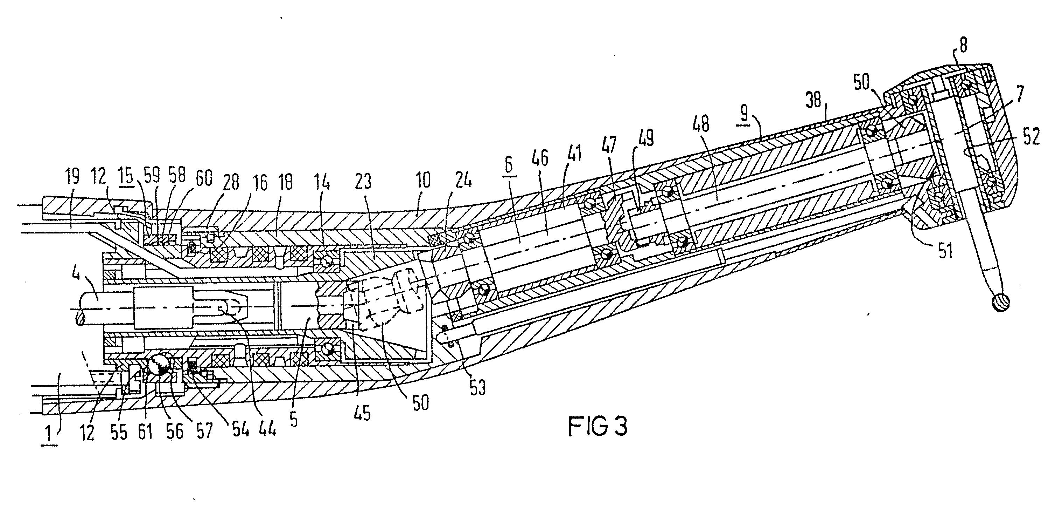

Anhand der Fig. 3, die einen Längsschnitt entlang des komplett montierten Handstückes nach Fig. 1 zeigt, wird der Aufbau und die Anordnung der Triebwellenabschnitte erläutert. Der Triebwellenabschnitt 5, der mittels einer Klauenkupplung 44 direkt mit der Antriebswelle 4 des Motors 2 gekuppelt ist, enthält zwei gleichachsige Triebzahnräder mit unterschiedlicher Zähnezahl, nämlich das als Glockenrad ausgebildete Triebzahnrad 23 und ein im Durchmesser kleineres Kronenrad 45. Der Triebwellenabschnitt 6 des Kopfteils 9 ist zweistufig ausgebildet; er enthält eine erste Triebwelle 46 mit den Zahnrädern 24 und 47 und achsparallel dazu eine zweite Triebwelle 48, mit den Zahnrädern 49, 50. Die Zahnradpaarung 47, 49 besteht aus einem innen- und einem außenverzahnten Stirnrad, die zusammen eine Getriebeübersetzung von 1 : 1,5 liefern. Das Zahnrad 50 an dem dem Kopfgehäuse zugewandten Ende der Triebwelle 48 ist als Kegelrad ausgebildet und steht in Eingriff mit einem Zahnrad 51 des Triebwellenabschnittes 7, welcher eine das anzutreibende, in der Darstellung nicht näher bezeichnete Drehwerkzeug aufnehmende Aufnahmehülse 52 trägt.

Die beiden Triebwellen 46 und 48 sind, wie aus F i g. 2 ersichtlich ist, Bestandteil des Kopfteils 9 und im engeren Sinne somit auch Bestandteil des mit 41 bezeichneten Halsteils.

In der mit durchgezogenen Linien gezeichnete Getriebestellung wird die Drehbewegung von der Antriebswelle 4 zunächst auf den Triebwellenabschnitt 5 und von dort über das Glockenrad 23 und das Kronenrad 24 auf die Triebwelle 46 übertragen. In dieser Getriebestufung erfolgt zunächst eine Übersetzung der Motordrehzahl im Verhältnis 1 : 2,1. Mittels der Getriebepaarung 47, 49 wird, wie bereits erwähnt, nochmals eine Getriebeübersetzung im Verhältnis 1 : 1,5 erzielt. Eine weitere, jedoch kleinere Übersetzung im Verhältnis 1 : 1,3 wird im Kopfgehäuse 8 mittels der Zahnradpaarung 50, 51 erzielt. Als Gesamtübersetzung ergibt sich somit ein Übersetzungsverhältnis 1 : 4,1.

Infolge der Aufteilung des Triebwellenabschnittes 6 in die zwei Stufen 46 und 48 ist es möglich, bei gleicher Anordnung der Triebwellenteile auch eine Untersetzung zu bekommen, indem der gesamten Triebwellenabschnitt — unter Beibehaltung der Getriebepaarung 47, 49 — umgekehrt angeordnet wird, die Triebwelle 48 mit dem Triebzahnrad 50 also anschließend an den Triebwellenabschnitt 5 gelagert ist, so daß das Triebzahnrad 50 in Eingriff kommt mit dem Kronenrad 45 des Triebwellenabschnittes 5 (siehe strichpunktierte Darstellung) und das Kronenrad 24 mit dem Triebzahnrad 51 des Triebwellenabschnittes 7 im Kopfgehäuse 8 kämmt. Die Getriebeverbindung 46, 47 bleibt bei dieser umgekehrten Anordnung erhalten, so daß die Drehzahl vom Triebwellenabschnitt 5 mit der Getriebekombination 45, 51 im Verhältnis 1 : 1 an den Triebwellenabschnitt 6 weitergegeben wird. In der Getriebeverbindung zwischen den beiden Stufen 47, 49 wird bei dieser Anordnung sodann eine Untersetzung erzielt.

Die beiden Triebwellen 46, 48 können vorteilhafterweise so ausgebildet und im Kopfteil 9 so angeordnet sein, daß sie komplett mit ihren Lagerungen oder auch einzeln alternativ in der einen oder anderen umgekehrten Anordnung eingebaut werden können. Es kann somit auch eine Getriebepaarung gebildet werden, bei der die Getriebeverzahnung zwischen den beiden Triebwellen 46 und 48 vertauscht ist und die Triebzahnräder in umgekehrter Reihenfolge angeordnet sind, also entweder die Getriebepaarung 23/24; 49/47 und 50/51 oder die Getriebepaarung 45/50; 47/49 und 24/51. Durch die vorbeschriebene Austauschbarkeit läßt sich die Anzahl der zu fertigenden Triebwellenteile reduzieren.

In der Hülse 10, die den Triebwellenabschnitt 5 und über einen Großteil auch den Triebwellenabschnitt 6 überdeckt, ist die Hülse 18 mittels des Schraubringes 28 axial festgelegt. Hierzu ist sowohl die Hülse 10 als auch die Hülse 18 mit einem als Anschlag dienenden Abschnitt 53 versehen. Der Schraubring 28 enthält eine dem Federring 16 angepaßte Nut, in die dieser (vgl. auch Fig. 1) eingreift. Der Federring 16 ist in einer Nut 54 der Hülse 14 radial federnd eingelegt. Bei axialem Aufschieben der durch den Schraubring 28 fest miteinander verbundenen Hülsen 10 und 18 schnappt der Federring 16 in die Ringnut des Schraubringes 28 ein. Die Griffhülse 10 mit dem an ihr befestigten Kopfteil 9 ist sodann axial gegenüber dem Antriebsteil 1 fixiert. Durch Überwinden eines bestimmten axialen Zuges kann die Griffhülse 10 mit den daran befestigten Teilen von der Hülse 14 wieder abgezogen werden. Mit dem Schraubring 28 läßt sich auch der Eingriff der Zahnradpaarung 23, 24 bzw. 45, 50 einstellen.

Die Hülse 14 ist mittels der Rasteinrichtung 15 an dem mit dem Antriebsgehäuse fest verbundenen Flanschteil 12 abnehmbar befestigt. Die Rasteinrichtung 15 enthält drei am Umfang in Radialbohrungen 55 des Flanschteils 12 eingelegte Kugeln 56, die in Ausnehmungen 57 der Hülse 14 eingreift. Die Kugeln 56 werden durch einen Haltering 58 nach innen, also auf die Ausnehmung 57 hin gedrückt. Der Haltering 58 enthält eine der Kugeloberfläche angepaßte erste Ringnut 59 und eine der Oberfläche des Federringes 16 angepaßte zweite Ringnut 60. Die Ringnut 60 dient zur unverlierbaren Halterung des Halteringes 58 bei abgenommener Hülse 10. Durch axiales Verschieben des Halteringes 58 nach rechts, also zum Kopfteil hin, kann so der Haltering mit der Ringnut 60 über den Federring 16 gelegt werden. In dieser Stellung können sich die Kugeln 56 nach außen bewegen, jedoch nur bis zu einem Anschlag 61, der durch die radiale Führungsnut bzw. Bohrung 55 gegeben ist. Dieser Anschlag ist so bemessen, daß die Hülse 14 axial aus dem Flanschteil 12 herausgezogen werden kann.

In dem aufgezeigten Ausführungsbeispiel liegen die Achsen der beiden Triebwellen 46 und 48 parallel zueinander. Vorteilhaft kann es auch sein, die Triebwellen so zu lagern, daß sich ihre Achsen unter einem Winkel schneiden; die Verzahnung ist dann ähnlich der der Triebzahnradpaarung 23/24 auszubilden. Mit einer solchen Lösung kann der gesamte »Kontraknick-Winkel«, d. h. der Winkel, der zwischen Motorachse und Achse des letzten Triebwellenabschnittes vor dem Kopfgehäuse gebildet wird, vergrößert werden.

**Patentansprüche**

1. Zahnärztliche Handstückanordnung mit einem eine Antriebswelle (4) aufnehmenden Antriebsteil (1) und einem daran drehbar und axial davon abnehmbar gehalterten Griffteil (11), an welchem ein demgegenüber abgewinkeltes Kopfteil (9) mit Kopfgehäuse (8) zur Aufnahme einer Lagerhülse (52) für ein Drehwerkzeug und mit Halsteil (41) abnehmbar gehalten ist, mit mehreren Triebwellenabschnitten (5 bis 7) zur Übertragung der Drehbewegung von der Antriebswelle auf die Lagerhülse sowie mit wenigstens zwei hintereinander im Antriebsteil und Kopfteil angeordneten Kühlmittelleitungsabschnitten (19, 19a; 25, 25a) für wenigstens ein Kühlmittel, welche durch eine aus einem Ringkanal (21, 20a) im einen und einer mit diesem korrespondierenden, radial in den Ringkanal mündenden Öffnung im anderen der gegeneinander verdrehbaren Handstückteile bestehende Drehkupplung miteinander verbunden sind, dadurch gekennzeichnet, daß der mit der Antriebswelle (4) des Antriebsteils (1) fest gekuppelte Triebwellenabschnitt (5) bis zum Schnittpunkt der abgewinkelten Achsen reicht und an seinem freien Ende zwei gleichartige Triebzahnräder (23, 45) mit unterschiedlicher Zähnezahl aufweist, daß dieser Triebwellenabschnitt (5) und dessen Lager von einer ersten Hülse (14) aufgenommen werden, die den einen Teil der Drehkupplung bildet und den einen Kühlmittelleitungsabschnitt (19) trägt, daß konzentrisch zu dieser Hülse (14) eine zweite Hülse (18) angeordnet ist, die den anderen Teil der Drehkupplung bildet und die das Kühlmittel von der ersten Hülse (14) übernimmt und mittels eines weiteren Kühlmittelleitungsabschnittes (25) an den Kopfteil (9) weiterleitet, daß ferner die erste Hülse (14) mittels einer Rastvorrichtung (15) an einem die Antriebswelle (4) konzentrisch umgebenden Ansatz (12) gegen Verdrehung gesichert, axial aber lösbar befestigt ist, daß die zweite Hülse (18) mittels einer betriebsmäßig zu lösenden Rasteinrichtung (16, 17) an der ersten Hülse (14) drehbar befestigt ist, und daß die zweite Hülse (18) in einer diese und einen Teil des Halsteiles (41) überdeckenden Außenhülse (10) gehalten ist, die den Griffteil (11) bildet und an der der Kopfteil (9) mit dem Kopfgehäuse (8) und den darin gelagerten übrigen Triebwellenabschnitten (7) abnehmbar gehalten ist, wobei das Triebzahnrad (24, 50) am freien Ende des dem Antriebsteil (1) zugewandten Triebwellenabschnittes (6) mit dem einen (23) oder anderen (45) Triebzahnrad des antriebsseitigen Triebwellenabschnittes (5) in Eingriff zu bringen ist.

2. Zahnärztliche Handstückanordnung nach Anspruch 1, dadurch gekennzeichnet, daß die Rastvorrichtung (15) zur Halterung der ersten Hülse (14) gebildet ist aus mehreren, in radiale Bohrungen (55) des Ansatzes (12) eingelegte Kugeln (56), einem darüber angeordneten federnden Ring (58) mit einer der Kugeloberfläche angepaßten Ausdrehung (59) zur Halterung der Kugeln und einer zumindest der Anzahl der Kugeln entsprechenden Zahl von Ausnehmungen (57) in der Hülse (14), in die die Kugeln (56) mit Hilfe des Ringes (58) zur Bildung einer nicht betriebsmäßig lösbaren Verbindung von Hülse (14) und Ansatz (12) gepreßt werden.

3. Zahnärztliche Handstückanordnung nach Anspruch 2, dadurch gekennzeichnet, daß der Ring (58) benachbart der Ausdrehung (59) und dem Kopfgehäuse (8) zugewandt eine weitere ringförmige Ausdrehung (60) enthält, die so ausgebildet ist, daß sie auf einen daneben befindlichen Rastfederring (16) unverlierbar aufschiebbar ist, der Teil der betriebsmäßig zu entriegelnden Rasteinrichtung (16, 17) zur Halterung der zweiten Hülse (18) an der ersten Hülse (14) ist.

**Claims**

1. A manual instrument assembly for dental use comprising a drive portion (1) which accommodates a drive shaft (4); a handle portion (11) which is mounted so as to be rotatable relative to the drive component and axially removable therefrom, and to which is removably secured a head portion (9) angled thereto and having a head housing (8) which serves to accommodate a bearing sleeve (52) for a rotating tool and a neck portion (41); a plurality to drive shaft sections (5 to 7) which serve to transfer rotary movement from the drive shaft to the bearing sleeve; and with at least two coolant line sections (19, 19a; 25, 25a) for at least one coolant, which are arranged in series in portion and the head portion, said coolant line sections being connected to one another by means of a rotary coupling which consists of an annular channel (21, 20a) in the first of the manual instrument parts which can be rotated relative to one another and a corresponding orifice which opens radially into the annular channel in the other of said manual instrument parts, characterized in that the drive shaft section (5) which is permanently coupled to the drive shaft (4) of the drive portion (1) extrends to the point of intersection of the angled aces and is provided at its free end with two similar drive pinions (23, 45) which have a different number of teeth; that this drive shaft section (5) and its bearing are accommodated in a first sleeve (14) which forms one part of the rotary coupling and carries the first coolant line section (19); that concentrically with this sleeve (14), there is arranged a second sleeve (18) which forms the other part of the rotary coupling and which receives the coolant from the first sleeve (14) and leads it on by means of a further coolant line section (25) to the head portion (9); that, moreover, the first sleeve (14) is axially, but detachably, secured by means of a locking device (15) to a shoulder (12) which concentrically surrounds the drive shaft (4), so as to be resistant to rotation; that the second sleeve (18) is rotatably secured to the first sleeve (14) by means of an operationally releasable locking device (16, 17) so as to be rotatable; and that the second sleeve (18) is secured in an outer sleeve (10) which covers the second sleeve itself and a part of the neck portion (41), and forms the handle portion (11), and to which the head portion (9), together with the head housing (8) and the other drive shaft sections (6, 7) mounted therein, is removably secured; whereby, at the free end of the drive shaft section (6) which faces towards the drive portion (1), the drive pinion (24, 50) is to be brought into engagement with one (23) or the other (45) drive pinion of the drive-end drive shaft section (5).

2. A manual instrument assembly for use in dentistry according to claim 1, characterized in that the locking device (15) which serves to secure the first sleeve (14) consists of a plurality of balls (56) which are inserted in radial bores (55) in the shoulder (12), a spring ring (58) arranged over them, having a recess (59) which is adapted to the surface of the balls and serves to secure the balls, and a number of recesses (57) in the sleeve (14) at least corresponding in number to the number of the balls into which the balls are pressed with the aid of the ring (58) in order to form a connection between the sleeve (14) and the shoulder (12) which cannot be operatively released.

3. A manual instrument assembly for use in dentistry according to claim 2, characterized in that, adjacent to the recess (59) and facing towards the head housing (8), the ring (58) contains a further annular recess (60) which is such that it can be pushed in captive manner over an adjacent stop spring ring (16) which forms part of the locking device (16, 17) which is to be operatively releasable, and serves to secure the second sleeve (18) to the first sleeve (14).

**Revendications**

1. Pièce à main pour dentisterie avec un élément moteur (1) et un élément de préhension (11) relié en rotation à ce dernier dont il est détachable axialement, élément de préhension (11) auquel est fixé de façon détachable un élément de tête (9) coudé par rapport à ce dernier et comportant un boîtier de tête (8) servant à recevoir une douille de support (52) pour un outil entraîné en rotation et un élément (41) formant collet, avec plusieurs sections d'arbre d'entraînement (5 à 7) pour transmettre le mouvement de rotation de l'arbre d'entraînement à la douille de support, et au moins deux sections de conduite (19, 19a; 25, 25a) pour un milieu réfrigérant, disposées l'une derrière l'autre dans l'élément moteur et dans l'élément de tête, lesdites sections de conduite étant reliées entre elles par un accouplement à rotation constitué par un canal annulaire (21, 20a) dans un élément de la pièce à main et par une ouverture ménagée dans l'autre élément de la pièce à main et débouchant radialement dans le canal annulaire, caractérisée par le fait que la section d'arbre d'entraînement (5) accouplé rigidement à l'arbre d'entraînement (4) de l'élément moteur (1), s'étend jusqu'au point d'intersection des axes coudés et comporte à son extrémité libre deux roues dentées motrices (23, 45) d'une même genre, avec des nombres de dents différents, que cette section d'arbre d'entraînements (5) et son palier sont reçus par une première douille (14) qui forme une partie de l'accouplement à rotation et porte l'une (19) des sections de conduite pour un milieu réfrigérant, que concentriquement par rapport à cette douille (14) est disposée une seconde douille (18) qui forme l'autre partie de l'accouplement à rotation et qui prend en charge le milieu réfrigérant de la première douille (14) pour le transmettre, à l'aide d'une autre section de conduite (25) pour le milieu réfrigérant, à l'élément de tête (9), qu'en outre la première douille (14) est fixée, de manière à ne pas pouvoir tourner, mais de façon détachable axialement, à l'aide d'un dispositif à enclenchement (15), à un appendice (12) entourant concentriquement l'arbre d'entraînement (4), que la seconde douille (18) est fixée à rotation à la première douille à l'aide d'un dispositif à enclenchement (16, 17) détachable en fonctionnement, et que la seconde douille (18) est montée dans une douille extérieure (10) qui recouvre celle-ci et une partie de l'élément (41) formant collet, douille extérieure (10) qui forme l'élément de préhension (11) et sur laquelle est monté de façon détachable l'élément de tête (9) avec le boîtier de tête (8) et les autres sections d'arbre d'entraînement (6, 7) qui y sont contenues, la roue dentée motrice (24, 50) à l'extrémité de la section d'arbre d'entraînement (6) qui est voisine de l'élément moteur (1), étant susceptible d'être amenée en prise avec l'une (23) ou l'autre (45) des roues dentées de la section d'arbre d'entraînement (5) située du côté de l'entraînement.

2. Pièce à main pour dentisterie selon la revendication 1, caractérisée par le fait que le dispositif à enclenchement (15) pour supporter la première douille (14) est constitué par plusieurs billes (56) qui sont engagées dans des perçages radiaux (55) de l'appendice (12), par une baque élastique (58) disposée sur cette douille, et pourvue d'un alésage (59) adapté à la surface supérieure des billes en vue de maintenir celles-ci, et avec, dans la douille (14), un nombre d'ouvertures (57) qui correspond au moins au nombre des billes, ouvertures (57) dans lesquelles les billes (56) sont pressées à l'aide d'une baque (58) en vue de former une liaison, non détachable en fonctionnement, entre la douille (14) et l'appendice (12).

3. Pièce à main pour dentisterie selon la revendication 2, caractérisée par le fait que la baque (58) comporte, dans le voisinage de l'alésage (59) et du côté du boîtier de tête (8), un autre alésage annulaire (60) qui est conformé de telle façon qu'il est susceptible d'être engagé, de façon non perdable, sur une bague élastique d'enclenchement (16) voisine, qui est constituée d'une partie du dispositif d'enclenchement (16, 17) à déverrouiller en fonctionnement, et servant à maintenir la seconde douille (18) sur la première douille (4).

FIG 1

FIG 2

0 029 863

FIG 3

0 029 863